# EUROPEAN PATENT SPECIFICATION

(11) **EP 2 620 053 B1**
(45) Date of publication and mention of the grant of the patent: **28.09.2016**
(21) Application number: 12005279.0
(22) Date of filing: 19.07.2012
(51) Int. Cl.: A01G 7/04, F21S 8/06, F21V 7/00, F21V 19/00, F21V 23/06, F21V 25/00, H01R 4/66

(54) **Horticultural lighting**
Forstwirtschaftliche Beleuchtung
Éclairage horticole

(30) Priority: 19.07.2011 GB 201112383
(43) Date of publication of application: 31.07.2013
(73) Proprietor: Hydrogarden Wholesale Supplies Ltd, Binley Industrial Park Coventry CV3 2NT (GB)
(72) Inventor: Green, Stuart, Coventry CV3 2NT (GB)
(74) Representative: Fry, David John

(56) References cited:
- US-A1- 2009 311 917

## Description

This invention relates to luminaires, and in particular to luminaires used for horticultural purposes.

There is a growing trend for home produced food products. While these can easily be produced using natural outdoor or indoor growing conditions depending on the variations in the climate and weather crops are often sub optimum and generally only one crop per year can be produced.

The use of artificial light to assist in the growth of plants is well known and its use is widespread. Artificial lights typically comprise a powerful light bulb, usually a high intensity discharge lamp (HID) or a compact fluorescent lamp (CFL) and a reflector.

The bulbs are of different sizes and luminaires are usually designed to be used with one type of bulb or the other so that the distance of the bulb from the reflector gives the desired light throw.

Traditional luminaires used for horticultural purposes are fairly large and bulky rendering them heavy and difficult to transport. Furthermore, as their reflectors are usually metal it is required that they be earthed. This is often realised by the use of a exposed earth cable leading from the lamp's electrical connection to the frame which is far from ideal. Often these connections need to be made by the purchaser and as such unreliable earth connections can occur.

US2009/0311917 A1 describes an electric bulb socket which provides a stable electric power connection of bare wires.

It is the purpose of the present invention to provide an improved luminaire.

According to a first aspect of the invention there is provided a luminaire comprising: a lamp fitting having: a lamp holder plate having a screw thread at one end; a lamp holder adjacent said lamp holder plate having a lamp socket at its distal end; and electrical connection means for connection to positive and neutral sides of a power supply; a fastening means attachable to the screw thread an earth plate having electrical connection means for connection to earth; the earth plate located between the lamp holder and the fastening means such that tightening the fastening means on the screw thread clamps said earth plate therebetween.

The luminaire preferably further comprises a reflector and a metal reflector bracket having a conductive attachment surface and said lamp fitting is preferably attached to said reflector bracket by clamping said attachment surface between the lamp holder plate and the fastening means in contact with said earth plate. Preferably the earth plate is clamped between the reflector bracket and the lamp holder plate.

In this way a simple earth connection Is made by clamping the earth plate against the reflector bracket so as to establish an electrical connection therebetween so as to simply earth the reflector bracket.

In one arrangement the reflector is removably attachable to the reflector bracket so that it is in electrically conductive contact therewith. Alternatively it ill be appreciated that the reflector may be directly clamped between the fastening means and the earth plate In place of the reflector bracket as described above, or that the reflector and reflector bracket are integral. In this way the reflector, which is typically a thin metal sheet, is also earthed.

The attachment between the reflector and the reflector bracket may consist of an attachment at one side of the reflector.

The reflector preferably comprises a bent sheet of metal, the reflector having a V shape bend running from the end adjacent the reflector bracket parallel to an axis through the centre of the lamp holder, screw thread and fastener.

Preferably the V-shape bend is sufficiently large to give rigidity along the length of the reflector such that, when suspended at one, or both, ends it does not bend under the weigh of the luminaire.

The lamp holder plate and screw thread may comprise a first part of the light fitting and the lamp holder may comprise a second part of the lamp fitting.

In a preferred arrangement the reflector bracket has a slot therein, one of each of the sides of the slot passing around the screw thread of the lamp fitting, and the lamp fitting is slidable in said slot to position the lamp fitting relative to the reflector. Clamping of the fastening means both creates the earth connection and holds the lamp fitting in place in the slot.

In one preferred arrangement the slot extends from an edge of the reflector bracket and the slot comprises a first slot width through which the screw thread passes and a second slot width adjacent the first slot width which is narrower than the first slot width such that if the fastening means becomes loosened the lamp fitting does not fall from the bracket.

A slot may be provided In the reflector and the luminaire may provided with a lamp retainer that, in use, passes through the slot and attaches to a lamp to support the weight of the lamp at a distance separated from the bulb socket. CFL lamps are very heavy and when mounted horizontally exert a considerable turning force on the lamp socket possibly bending the bracket or reflector so that, instead of lying parallel to the reflector the lamp hang down therefrom at an angle. Supporting the bulb towards its end overcomes these problems.

The bulb retainer may comprise an elongate shaft and two laminar sections at either end. One laminar section is dimensioned to pass through the slot in the reflector in a first orientation in which it is aligned with said slot and neither end will pass through said slot when the retainer is rotated through 90 degrees to said slot. Where the reflector comprises a bent sheet of metal having a V shape bend running from the end adjacent the reflector bracket parallel to an axis through the centre of the lamp fitting the slot may be located in the lower part of the V shaped bend. Preferably the laminar section at one end of the retainer is shaped to nest in the V shaped bend. The laminar section at one end of the retainer can be shaped support two tubes of a compact fluorescent lamp.

The luminaire may comprise a compact fluorescent lamp having a plurality of tubes and the laminar section that passes through the slot extends downwards therefrom and passes between two adjacent tubes of the compact fluorescent lamp. Rotating the retainer through 90 degrees then locates the laminar section on said two adjacent tubes of the compact fluorescent lamp so that it is suspended from the reflector by the retainer.

The lamp bracket can have a first hanging means attached thereto, and a second hanging means may be provided attached to a hanging bracket fixed to an opposite side of the reflector. Alternatively the luminaire may have a hanging bracket fixed to either end of the reflector and a hanging means may be attached to each hanging bracket. The hanging means are preferably made of electrically insulating material.

The luminaire according preferably comprises one of a compact fluorescent lamp and a high intensity discharge lamp.

As preferred embodiment describes a kit for making a luminaire, the kit comprising: a lamp fitting having: a lamp holder plate having a screw thread at one end; a lamp holder, adjacent said lamp holder plate, having a lamp socket at its distil end; and electrical connection means for connection to positive and neutral sides of a power supply; a fastening means attachable to the screw thread; an earth plate having electrical connection means for connection to earth; the earth plate for location between the lamp holder plate and the fastening means such that tightening the fastening means on the screw thread clamps said earth plate therebetween; a reflector; a metal reflector bracket having an attachment surface for attachment to said lamp fitting by clamping said attachment surface between the lamp holder plate and the fastening means in contact with said earth plate.

Preferably the reflector comprises a bent sheet of metal, the reflector having a V shape bend running from the end adjacent the reflector bracket parallel to an axis through the centre of the lamp holder, screw thread and fastener, and wherein a slot is provided in the base of the V shaped bend; and the kit further comprises: a bulb retainer comprising an elongate shaft and two laminar sections at either end thereof wherein one laminar section is dimensioned to pass through the slot in the reflector in a first orientation in which it is aligned with said slot and wherein neither end will pass through said slot when the retainer is rotated through 90 degrees to said slot, to, in use attach to a bulb to support the weight of the bulb at a distance separated from the lamp holder.

The kit may further comprise a slot plug which can be inserted into said slot in place of the bulb retainer.

In one embodiment the kit includes: a first hanging means for attachment to the lamp fitting; and a second hanging for attachment to a side of the reflector opposite the lamp bracket.

Preferably the kit further comprises one of a compact fluorescent lamp and a high intensity discharge lamp.

The invention will now be described, by way of example, with reference to the accompanying drawings in which:
- Figure 1: is a diagram of an exploded lamp fitting of the invention;
- Figure 2: is a diagram of an assembled lamp fitting of the invention;
- Figure 3: is a diagram of the lamp fitting attached to a reflector bracket of the invention;
- Figure 4: is an end view of the bracket of Figure 3:
- Figure 5: is an assembled reflector and reflector bracket of the invention;
- Figure 6: is a partial perspective view of the luminaire of the invention;
- Figure 7: is a partial end view of the luminaire of the invention; and
- Figure 8: is an alternative partial perspective view of the luminaire of the invention.

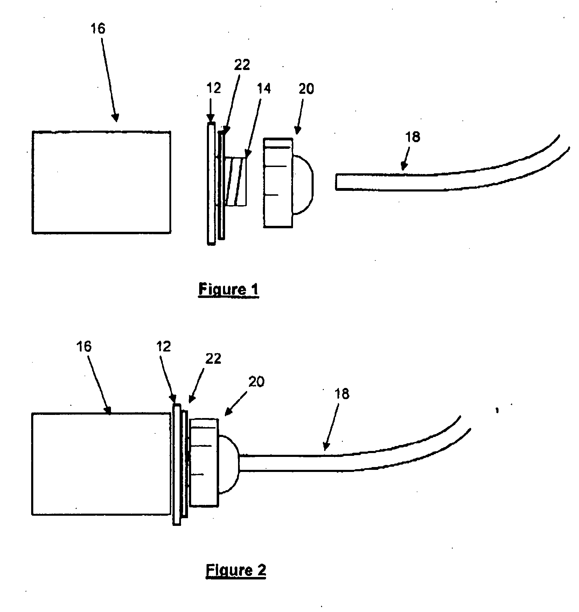

Referring to Figures 1 and 2 a lamp fitting 10 is shown comprising a lamp holder plate 12 which has a screw thread 14 at one end. A lamp holder 16 Is located adjacent to and is fixed to the lamp holder plate 12. Although shown as two separate items it will be appreciated that these parts may be formed integrally with one another.

The lamp holder plate 12 and the lamp holder 16 are both made of insulating materials. Preferably the lamp holder plate 12 is made of a plastics material and the lamp holder 16 is made of a ceramics material.

The lamp holder 16 is provided with a lamp socket therein for receiving a lamp bulb. The socket may be of a known type, for example it may be of a screw thread fitting or of a bayonet-type fitting.

The lamp socket has standard electrical connections for connections to the positive and neutral wires of the cable 18 of an electrical supply.

The fitting also has a fastener 20 that has a threaded inner surface for threaded engagement with the screw thread 14.

The fastener 20, the lamp holder plate 12 and the lamp holder 16have a central hole passing therethrough to enable the cable to pass through the centre of these parts for attachment to the lamp socket. The fastener 20 may encapsulate a rubber grommet which, when tightened on the screw thread 14 clamps around the cable 18.

An earth plate 22 having a central hole is located over the screw thread 14 of the lamp holder plate 12. The earth plate 22 has a connector, not shown, for attachment to the earth wire of the electrical cable 18. As shown in Figure 2 as the fastener 20 is tightened on the screw thread 14 the earth plate 22 becomes trapped between the fastener 20 and the lamp plate 12. Alternatively it is anticipated that the earth plate may be a metal insert on the face off the lamp holder plate 12 and need not be a separate item.

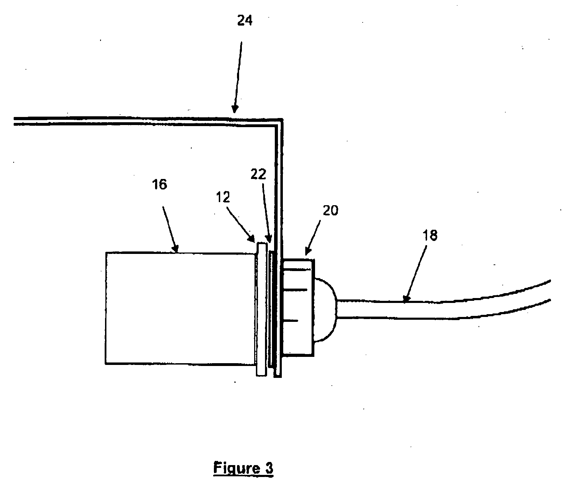

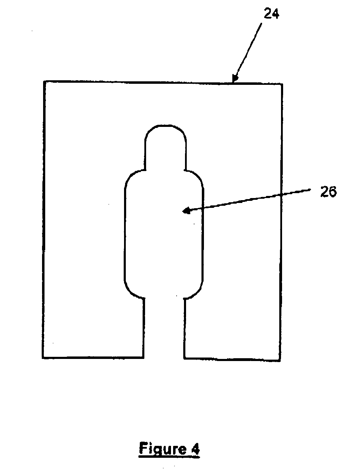

Referring now to Figures 3 and 4 it can be seen that a lamp bracket 24 having a hole slot 26 therein can be used in combination with the lamp fitting 10.

The screw thread 14 of the lamp fitting 10 is passed through the hole or slot 26 of the reflector bracket 24 and the fastener 20 tightened on the thread 14.

The end face of the reflector bracket 24 has the slot 26 therein. The slot 26 has a first width towards either end and a second width, greater than the first width, in the central section thereof. The screw thread 14 of the lamp fitting 10 passes through the wider part of the slot but not the narrow part of the slot. The narrowing of the slot 26 towards the base prevents the lamp fitting 10from falling therefrom if, for any reason, the lamp fitting 10 were to become loosened during use.

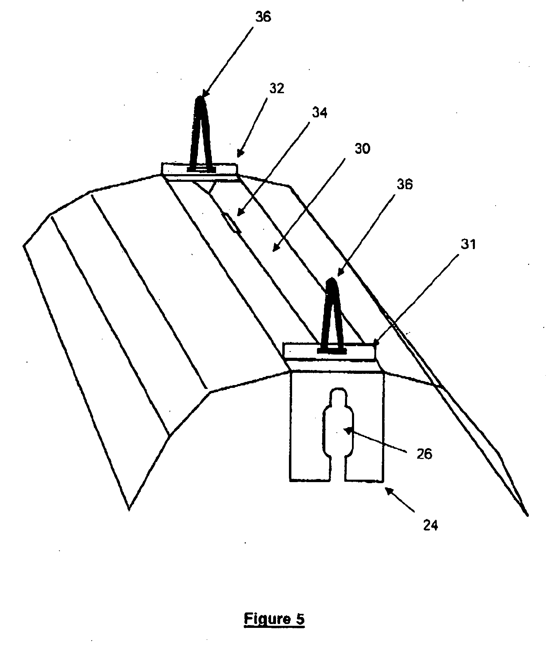

Referring now to Figure 5 a reflector assembly is shown comprising a reflector bracket 24 and a reflector 28. The reflector 28 has a v-shaped spine 30 running along its entire length. The reflector 28 is fabricated by bending a single piece of metal material. The reflector 28 and the reflector bracket 24 are preferably connected together by removable connection means, for example nuts and bolts, so that they can be detached for one another, this will enable the luminaire to be easily assembled at home or in a shop prior to sale.

As can be seen, tightening the fastener 20 clamps the earth plate 22 against the reflector bracket 24, which, as It is metal, creates an electrical contact between the earth plate 22 and the bracket 24. The method of creating the earth connection is simple and reliable and does not require the user to conduct any wiring of their own when assembling the reflector, reflector bracket and lamp fitting to form the luminaire. As the lamp fitting 10 is tightened in a slot 26 to retain it in place then the fitting 20 must be tied sufficiently tight to retain the lamp fitting 10 in place at the required separation from the reflector 28. Conveniently this clamping force is sufficient to create an earth connection between the earth plate 22 and the reflector bracket 24.

The reflector bracket 24 is in direct contact with the reflector 28 to ensure good conductivity between the two thereby ensuring that the reflector is fully earthed.

As can be seen the lamp bracket 24 has a hanging bracket 31 formed therewith and a hanging bracket 32 is provided at the end of the reflector opposite the lamp bracket 24. the hanging bracket 32 may also be removably connected to the reflector as described above. Two hanging means 36 are provided at either end of the luminaire so that It may be suspended in a desired location.

As can be seen in Figure 5 a slot 34 is provided in the bottom of the v-shaped spine 30 towards the end away from the lamp bracket 24.

The provision of the v-shaped spine 30 running along the centre of the reflector gives structural rigidity to the luminaire in a way that has little impact on the luminaire's overall weight.

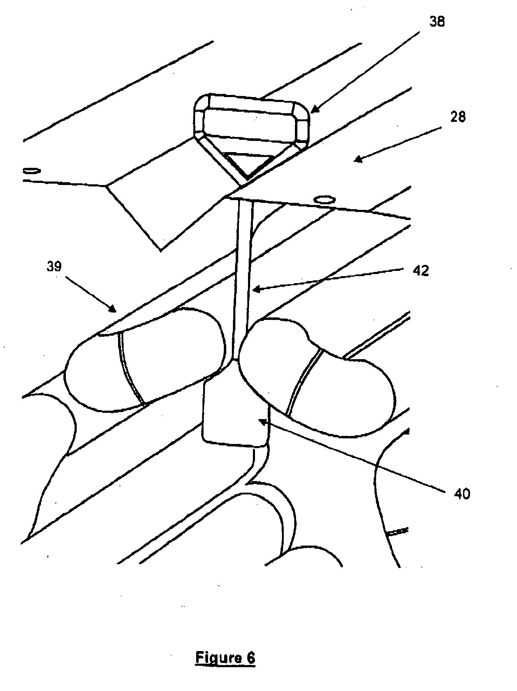

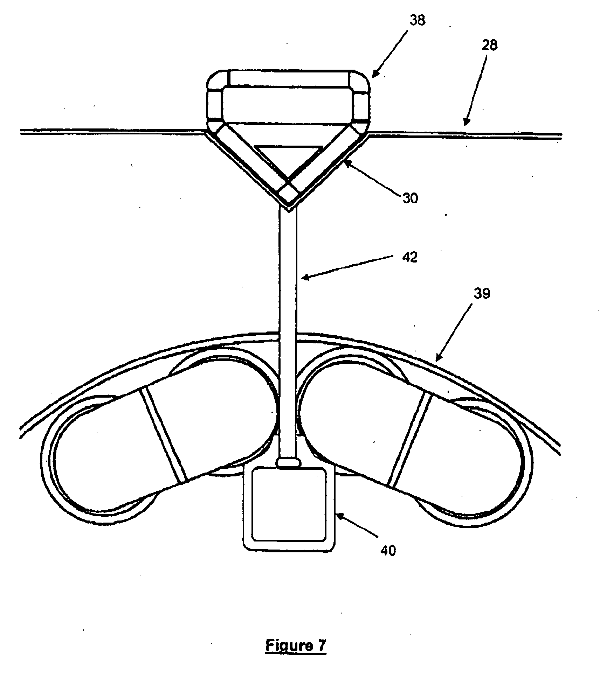

Referring now to Figures 6 and 7 a lamp retainer is shown used in combination with the luminaire of the invention.

The bulb retainer is designed to help spread the weight of a CFL 39 along the axis of the luminaire as opposed to, in the situation where there is no support and the CFL 39 is supported only by its fitting to the lamp holder 16, the weight of the CFL 29 imparting a turning force on the lamp holder 16 and bracket 24 that would cause the CFL to collapse under its own weight away from the reflector.

The bottom end of the retainer is inserted through the slot 34 In the reflector 26 and Is moved downwardly in the same orientation until is passes through the tubes of the CFL 39.

In its fully inserted position the lower laminar end 40 of the bulb retainer passes between tubes of the CFL and as the bulb retainer is rotated through 90° from a position parallel with the longitudinal axis of the luminaire to a position substantially perpendicular to the longitudinal axis of the CFL 39 the lower laminar end 40 extends to either side of the gap between the tubes of the CFL 39 so as to act as a tie to retain the CFL 39 In position relative to the reflector 28.

The central shaft 42 of the retainer is dimensioned such that, when the retainer is rotated perpendicular the direction of the longitudinal axis of the luminaire, the bulb retainer is retained in place with the central shaft 42 being exactly the right length to support the CFL 39 in a position substantially parallel to the longitudinal axis of the luminaire.

The upper laminar part 38 of the retainer has two angled lower edges so that when turned through 90° the angle of these edges corresponds directly to the longitudinal v running along the length of the reflector and nests therein.

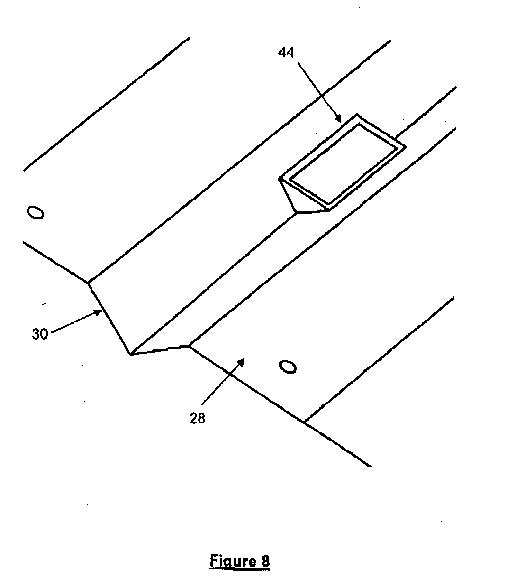

Referring now to Figure 8 one or more plugs 44 can be inserted into the slot 34 when it is not in use.

The luminaire may be sold as a ready assembled unit or may be sold as a kit for home assembly. Conveniently the reflectors 28 may be nested easily inside of one another for shipping and it will be anticipated that the kits may be put together at the point of retail.

The above invention therefore provides a luminaire that can be used with either CFL's or with HID lamps and which is lightweight, simple to assemble and has an earthing system that requires minimum skill level from the user, in particular it does not need the user to perform any wiring when assembling the lamp fitting with the reflector and reflector bracket. Furthermore a very light weight structure can be achieved that can fully support the weight of CFL bulbs.

## Claims

1. A luminaire comprising:
a lamp fitting having: a lamp holder plate (12) having a screw thread (14) at one end; a lamp holder (16) adjacent said lamp holder plate having a lamp socket at its distil end; and electrical connection means for connection to positive and neutral sides of a power supply;
a fastening means (20) attachable to the screw thread
an earth plate (22) having electrical connection means for connection to earth; the earth plate located between the lamp holder plate and the fastening means such that tightening the fastening means on the screw thread clamps said earth plate therebetween.

2. A luminaire according to claim 1 further comprising a reflector (28) and metal reflector bracket (24) having a conductive attachment surface and said lamp fitting is attached to said reflector bracket by clamping said attachment surface between the lamp holder plate and the fastening means in contact with said earth plate.

3. A luminaire according to claim 2 wherein the reflector is removably attachable to the reflector bracket.

4. A luminair according to claim 3 wherein the attachment between the reflector and the reflector bracket consists of an attachment at one side of the reflector.

5. A luminaire according to claim 4 wherein the reflector comprises a bent sheet of metal, the reflector having a V shape bend (30) running from the end adjacent the reflector bracket parallel to an axis through the centre of the lamp fitting, screw thread and fastener.

6. A luminaire according to any one of the previous claims wherein the lamp holder plate and screw thread comprise a first lamp holder part and a lamp socket comprises a second lamp holder part.

7. A luminaire according to any one of claims 2 to 5 wherein said reflector bracket has a slot (26) therein, one of each of the sides of the slot passing around the screw thread of the lamp fitting and wherein the lamp fitting is slidable in said slot to position the lamp fitting relative to the reflector.

8. A luminaire according to claim 7 wherein the slot extends from an edge of the reflector bracket and the slot comprises a first slot width through which the screw thread passes and a second slot width adjacent the first slot width which is narrower than the first slot width such that if the fastening means becomes loosened the lamp fitting does not fall from the bracket.

9. A luminaire according to claim 2 wherein a slot is provided in the reflector and wherein the light is provided with a bulb retainer that, in use, passes through the slot and attaches to a bulb to support the weight of the bulb at a distance separated from the bulb socket.

10. A luminaire according to claim 9 wherein the bulb retainer comprises an elongate shaft and two laminar sections at either end and wherein one laminar section (40) is dimensioned to pass through the slot in the reflector in a first orientation in which it is aligned with said slot and wherein neither end will pass through said slot when the retainer is rotated through 90 degrees to said slot.

11. A luminaire according to claim 10 wherein the reflector comprises a bent sheet of metal, the reflector having a V shape bend running from the end adjacent the reflector bracket parallel to an axis through the centre of the lamp holder, screw thread and fastener and wherein the slot is located in the lower part of the V shaped bend.

12. A luminaire according to claim 11 wherein the laminar section at one end of the retainer is shaped to nest in the V shaped bend.

13. A luminaire according to claim 10 to 12 wherein the laminar section at one end of the retainer is shaped support two tubes of a compact fluorescent lamp.

14. A luminaire according to claim 10 further comprising a compact fluorescent lamp having a plurality of tubes and wherein the laminar section that passes through the slot extends downwards therefrom and passes between two adjacent tubes of the compact fluorescent lamp and wherein rotating said retainer through 90 degrees locates the laminar section on said two adjacent tubes of the compact fluorescent lamp so that it is suspended from the reflector by the retainer.

15. A luminaire according to any one of the previous claims wherein the lamp fitting has a first hanging means attached thereto, and wherein a second hanging means is provided attached to a hanging bracket fixed to an opposite side of the reflector.

16. A luminaire according to claim 15 wherein the hanging means are made of electrically insulating material.

## Patentansprüche

1. Beleuchtungskörper, umfassend:
eine Lampenhalterung, mit: einer Lampenhalterplatte (12) mit einem Schraubgewinde (14) an einem Ende; einem Lampenhalter (16) neben der Lampenhalterplatte mit einer Lampenfassung an dem distalen Ende; und einer elektrischen Verbindungseinrichtung zur Verbindung mit den positiven und neutralen Seiten einer Stromversorgung;
eine Befestigungseinrichtung (20), die an dem Schraubgewinde angebracht werden kann;
eine Erdungsplatte (22) mit einer elektrischen Verbindungseinrichtung zur Masseverbindung;
wobei sich die Erdungsplatte zwischen der Lampenhalterplatte und der Befestigungseinrichtung befindet, so dass ein Festziehen der Befestigungseinrichtung an dem Schraubgewinde die Erdungsplatte dazwischen einklemmt.

2. Beleuchtungskörper nach Anspruch 1, ferner umfassend einen Reflektor (28) und einen Metallreflektorträger (24) mit einer leitfähigen Anbringungsoberfläche, und wobei die Lampenhalterung durch Einklemmen der Anbringungsoberfläche zwischen der Lampenhalterplatte und der Befestigungseinrichtung in Kontakt mit der Erdungsplatte an dem Reflektor angebracht ist.

3. Beleuchtungskörper nach Anspruch 2, wobei der Reflektor entfernbar an dem Reflektorträger befestigt werden kann.

4. Beleuchtungskörper nach Anspruch 2, wobei die Anbringung zwischen dem Reflektor und dem Reflektorträger aus einer Anbringung an einer Seite des Reflektors besteht.

5. Beleuchtungskörper nach Anspruch 4, wobei der Reflektor ein gebogenes Metallblech umfasst, wobei der Reflektor eine V-förmige Biegung (30) aufweist, die von dem Ende neben dem Reflektorträger parallel zu einer Achse durch die Mitte der Lampenhalterung, das Schraubgewinde und die Befestigungseinrichtung verläuft.

6. Beleuchtungskörper nach einem der vorstehenden Ansprüche, wobei die Lampenhalterplatte und das Schraubgewinde einen ersten Lampenhalterteil umfasst, und wobei eine Lampenfassung einen zweiten Lampenhalterteil umfasst.

7. Beleuchtungskörper nach einem der Ansprüche 2 bis 5, wobei der Reflektorträger darin einen Schlitz (26) aufweist, wobei eine jeder der Seiten des Schlitzes um das Schraubgewinde der Lampenhalterung verläuft, und wobei die Lampenhalterung in dem Schlitz verschiebbar ist, um die Lampenhalterung im Verhältnis zu dem Reflektor zu positionieren.

8. Beleuchtungskörper nach Anspruch 7, wobei sich der Schlitz von einer Kante des Reflektorträgers erstreckt, und wobei der Schlitz eine erste Schlitzbreite umfasst, durch welche das Schraubgewinde verläuft, und eine zweite Schlitzbreite neben der ersten Schlitzbreite, die schmaler ist als die erste Schlitzbreite, so dass, wenn die Befestigungseinrichtung gelöst wird, die Lampenhalterung nicht von dem Träger fällt.

9. Beleuchtungskörper nach Anspruch 2, wobei in dem Reflektor ein Schlitz bereitgestellt ist, und wobei das Licht durch einen Glühbirnenhalter bereitgestellt wird, der im Einsatz durch den Schlitz verläuft und an einer Glühbirne angebracht wird, um das Gewicht der Glühbirne in einem Abstand zu der Glühbirnenfassung zu tragen.

10. Beleuchtungskörper nach Anspruch 9, wobei der Glühbirnenhalter einen länglichen Schaft umfasst und zwei laminare Abschnitte an jedem Ende, und wobei ein laminarer Abschnitt (40) so bemessen ist, dass er in einer ersten Ausrichtung, an welcher er mit dem Schlitz ausgerichtet ist, durch den Schlitz in dem Reflektor verläuft, und wobei kein Ende durch den Schlitz verläuft, wenn der Halter um 90 Grad zu dem Schlitz gedreht ist.

11. Beleuchtungskörper nach Anspruch 10, wobei der Reflektor ein gebogenes Metallblech umfasst, wobei der Reflektor eine V-förmige Biegung aufweist, die von dem Ende neben dem Reflektorträger parallel zu einer Achse durch die Mitte des Lampenhalters, das Schraubgewinde und die Befestigungseinrichtung verläuft, und wobei sich der Schlitz in dem unteren Teil der V-förmigen Biegung befindet.

12. Beleuchtungskörper nach Anspruch 11, wobei der laminare Abschnitt an einem Ende des Halters so geformt ist, dass er in der V-förmigen Biegung sitzt.

13. Beleuchtungskörper nach Anspruch 10 oder 12, wobei der laminare Abschnitt an einem Ende des Halters so geformt ist, dass er zwei Röhren einer kompakten Leuchtstofflampe trägt.

14. Beleuchtungskörper nach Anspruch 10, ferner umfassend eine kompakte Leuchtstofflampe mit mehreren Röhren, und wobei der laminare Abschnitt, der durch den Schlitz verläuft, sich von dort nach unten erstreckt und zwischen zwei benachbarten Röhren der kompakten Leuchtstofflampe verläuft, und wobei eine Rotation des Halters um 90 Grad den laminaren Abschnitt an zwei benachbarten Röhren der kompakten Leuchtstofflampe so positioniert, dass er durch den Halter an dem Reflektor hängt.

15. Beleuchtungskörper nach einem der vorstehenden Ansprüche, wobei die Lampenhalterung eine daran angebrachte erste Hängeeinrichtung aufweist, und wobei eine zweite Hängeeinrichtung bereitgestellt ist, die an einem Hängeträger angebracht ist, der an einer entgegengesetzten Seite des Reflektors fixiert ist.

16. Beleuchtungskörper nach Anspruch 15, wobei die Hängeeinrichtungen aus einem elektrisch isolierenden Material bestehen.

## Revendications

1. Luminaire comprenant :
une armature de lampe ayant : une plaque de support de lampe (12) ayant un filetage (14) à une extrémité ; un support de lampe (16) adjacent à ladite plaque de support de lampe ayant une douille de lampe à son extrémité distale ; et des moyens de connexion électrique pour la connexion aux côtés positif ou neutre d'une alimentation électrique ;
des moyens de fixation (20) pouvant être fixés au filetage ;
une plaque de terre (22) ayant des moyens de connexion électrique pour la connexion à la terre ; la plaque de terre étant située entre la plaque de support de lampe et les moyens de fixation de sorte que le serrage des moyens de fixation sur le filetage serre ladite plaque de terre entre eux.

2. Luminaire selon la revendication 1, comprenant en outre un réflecteur (28) et un support de réflecteur métallique (24) ayant une surface de fixation conductrice et ladite armature de lampe étant fixée audit support de réflecteur en serrant ladite surface de fixation entre la plaque de support de lampe et les moyens de fixation au contact de ladite plaque de terre.

3. Luminaire selon la revendication 2, le réflecteur pouvant être fixé de façon amovible au support de réflecteur.

4. Luminaire selon la revendication 3, la fixation entre le réflecteur et le support de réflecteur consistant en une fixation sur un côté du réflecteur.

5. Luminaire selon la revendication 4, le réflecteur comprenant une feuille de métal pliée, le réflecteur ayant un pli en forme de V (30) partant de l'extrémité adjacente au support de réflecteur parallèlement à un axe traversant le centre de l'armature de lampe, du filetage et de la fixation.

6. Luminaire selon l'une quelconque des revendications précédentes, la plaque de support de lampe et le filetage comprenant une première partie de support de lampe et une douille de lampe comprenant une seconde partie de support de lampe.

7. Luminaire selon l'une quelconque des revendications 2 à 5, ledit support de réflecteur ayant en son sein une fente (26), chacun des côtés de la fente passant autour du filetage de l'armature de lampe et l'armature de lampe étant coulissante dans ladite fente pour positionner l'armature de lampe par rapport au réflecteur.

8. Luminaire selon la revendication 7, la fente s'étendant à partir d'un bord du support de réflecteur et la fente comprenant une première largeur de fente à travers laquelle passe le filetage et une seconde largeur de fente qui est plus étroite que la première largeur de fente de sorte que si les moyens de fixation se desserrent, l'armature de lampe ne tombe pas du support.

9. Luminaire selon la revendication 2, une fente étant pratiquée dans le réflecteur et la lampe comprenant une retenue d'ampoule qui, lors de l'utilisation, traverse la fente et se fixe à une ampoule pour supporter le poids de l'ampoule à une distance séparée de la douille d'ampoule.

10. Luminaire selon la revendication 9, la retenue d'ampoule comprenant un axe allongé et deux sections laminaires à chaque extrémité et une section laminaire (40) étant dimensionnée pour traverser la fente dans le réflecteur dans une première orientation dans laquelle elle est alignée avec ladite fente et aucune extrémité ne traversant ladite fente lorsque la retenue est tournée à 90 degrés par rapport à ladite fente.

11. Luminaire selon la revendication 10, le réflecteur comprenant une feuille de métal pliée, le réflecteur ayant un pli en forme de V partant de l'extrémité adjacente au support de réflecteur parallèlement à un axe traversant le centre de l'armature de lampe, du filetage et de la fixation et la fente se trouvant dans la partie inférieure du pli en forme de V.

12. Luminaire selon la revendication 11, la section laminaire à une extrémité de la retenue ayant une forme pour reposer dans le pli en forme de V.

13. Luminaire selon l'une quelconque des revendications 10 à 12, la section laminaire à une extrémité de la retenue ayant une forme pour supporter deux tubes d'une lampe fluorescente compacte.

14. Luminaire selon la revendication 10, comprenant en outre une lampe fluorescente compacte ayant une pluralité de tubes et la section laminaire qui traverse la fente s'étendant vers le bas à partir de là et passant entre deux tubes adjacents de la lampe fluorescente compacte et la rotation de la retenue à 90 degrés plaçant la section laminaire sur lesdits deux tubes adjacents de la lampe fluorescente compacte afin qu'elle soit suspendue au réflecteur par la retenue.

15. Luminaire selon l'une quelconque des revendications précédentes, l'armature de lampe ayant des premiers moyens de suspension fixés à elle, et des seconds moyens de suspension étant fixés à un support de fixation fixé à un côté opposé du réflecteur.

16. Luminaire selon la revendication 15, les moyens de suspension étant en un matériau électriquement isolant.
